(19) Europäisches Patentamt
European Patent Office
Office européen des brevets

(11) Veröffentlichungsnummer: **0 119 554**
**B1**

(12) # EUROPÄISCHE PATENTSCHRIFT

(45) Veröffentlichungstag der Patentschrift: **13.08.86**

(51) Int. Cl.⁴: **C 08 L 67/02**, C 08 L 69/00, C 08 K 5/06

(21) Anmeldenummer: **84102486.2**

(22) Anmeldetag: **08.03.84**

(54) **Aromatische Polyester und Polyestercarbonate mit verbesserter Verarbeitbarkeit, Verfahren zu ihrer Herstellung und ihre Verwendung als Formmassen.**

(30) Priorität: **18.03.83 DE 3309766**

(43) Veröffentlichungstag der Anmeldung: **26.09.84 Patentblatt 84/39**

(45) Bekanntmachung des Hinweises auf die Patenterteilung: **13.08.86 Patentblatt 86/33**

(84) Benannte Vertragsstaaten: **DE FR GB IT**

(56) Entgegenhaltungen: **FR-A-1 267 725**

(73) Patentinhaber: **BAYER AG, Konzernverwaltung RP Patentabteilung, D-5090 Leverkusen 1 Bayerwerk (DE)**

(72) Erfinder: **Schmidt, Manfred, Dr., Bodelschwinghstrasse 20, D-4150 Krefeld (DE)**
Erfinder: **Rathmann, Dietrich, Dr., Alte Landstrasse 119, D-5090 Leverkusen (DE)**
Erfinder: **Reinking, Klaus, Dr., Robert- Stolz-Strasse 16, D-5632 Wermelskirchen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 119 554 B1

LIBER, STOCKHOLM 1986

**Beschreibung**

Die Erfindung betrifft thermoplastische Polyester und Polyestercarbonate auf Basis von Diphenolen und Iso- und/oder Terephthalsäure, die zur Verbesserung der Fließfähigkeit in der Schmelze bestimmte substituierte Diphenylether enthalten.

Aromatische Polyester und Polycarbonate sind bekannt (W.M. Eareckson, J. Polym. Sci. XL, 399 - 406 (1959); André Conix, "Thermoplastic Polyesters from Bisphenols", Ind. Eng. Chem., Vol. 51, No. 2, 147 - 150, Febr. 1959; FR 1 177 517, US 3 351 624, DE-AS 1 445 384; G.S. Kolesnikow et al, J. Polym. Sci. USSR, Vol. 9, 1967, S. 1705 bis 1711; US 2 030 331, 3 169 121, 3 409 704, DE-OS 2 714 544, 2 758 030).

Sie werden aufgrund ihrer ausgezeichneten Eigenschaften überall dort eingesetzt, wo hohe Wärmeformbeständigkeit und Zähigkeit erwünscht sind.

Aufgrund hoher Erweichungspunkte und relativ hoher Viskositäten in der Schmelze ergeben sich für aromatische Polyester und Polyestercarbonate oftmals Verarbeitungsschwierigkeiten. Deshalb ist man daran interessiert, die Fließfähigkeit der Schmelze noch zu verbessern. Zu diesem Zweck sind schon verschiedene Maßnahmen vorgeschlagen worden:

Einerseits hat man das Problem über die Legierung mit ABS-Harzen (japanische veröffentlichte Patentanmeldung 73/25 053), Polyethylenterephthalat (DE-OS 23 33 017, japanische veröffentlichte Patentanmeldung 74/23 844, US 39 46 091), Polyethylenhydroxybenzoat (japanische veröffentlichte Patentanmeldung 75/5444), Copolyestern aus Ethylenglykol, Terephthal- und p-Hydroxybenzoesäure (japanische veröffentlichte Patentanmeldung 75/64 351), aliphatischen oder aromatischen Polyestern (japanische veröffentlichte Patentanmeldung 75/96 652) und Polyamiden (DE-OS 26 46 728) zu lösen versucht, wobei dann allerdings nicht nur die Wärmeformbeständigkeit und die mechanischen Eigenschaften der erhaltenen Legierungen manche Wünsche offen ließen, sondern auch die Transparenz verlorenging.

Andererseits wurde auch schon vorgeschlagen, die Fließfähigkeit aromatischer Polyester durch Zusatz folgender niedermolekularer Hilfsmittel zu steigern: Trialkylphosphate, Diphenylsulfoxid, Ester aromatischer Phosphonsäuren und Ester aromatischer Carbonsäuren (japanische veröffentlichte Patentanmeldungen 74/34 546, 74/86 433, 76/37 145, 76/37 146). Wegen des hohen Dampfdrucks dieser Verbindungen muß man in Anbetracht der hohen Verarbeitungstemperaturen aromatischer Polyester mit Verdampfungsverlusten und gar mit Selbstentzündung dieser Fließhilfsmittel rechnen.

Aufgabe der Erfindung war es daher, eine bessers Verarbeitbarkeit von aromatischen Polyestern und Polyestercarbonaten mit Fließhilfsmitteln zu erreichen, die die oben erwähnten Nachteile nicht aufweisen.

Gegenstand der Erfindung sind Mischungen, enthaltend

A. 95 bis 99,5 Gew.-%, bezogen auf die Summe von A und B, aromatische Polyester und/oder aromatische Polyestercarbonate auf Basis von Diphenolen und Iso- und/oder Terephthalsäure und

B. 0,5 bis 5 Gew.-%, bezogen auf die Summe von A und B, mindestens einer Verbindung der Formel

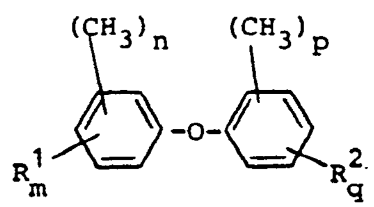

(I)

worin

| | |
|---|---|
| $R^1$, $R^2$ | einen Alkylrest mit 2 bis 24, vorzugsweise mit 8 bis 18, C-Atomen, |
| n, m, p, q | Null oder eine ganze Zahl von 1 bis 4 bedeuten mit der Maßgabe, daß die Summen von |
| m + q | mindestens 1 und von |
| n+m+p+q | höchstens 6 betragen. |
| m, q | bedeuten vorzugsweise 1 oder 2, |
| n, p | vorzugsweise Null oder 1 |

Weiterer Gegenstand der Erfindung ist ein Verfahren zur Herstellung dieser Mischungen, wonach man die Komponenten vereinigt, auf eine Temperatur, die 10 bis 80° C oberhalb des Erweichungspunkts der Komponente A liegt, erhitzt und unter Einwirkung von Scherkräften homogenisiert.

Weiterer Gegenstand der Erfindung ist die Verwendung dieser Mischungen zur Herstellung von Formkörpern und Folien.

Das Verhältnis Iso-/Terephthalsäurereste in den aromatischen Polyestern und Polyestercarbonaten A beträgt vorzugsweise 3/7 bis 7/3, insbesondere 4.5/5.5 bis 5.5/4.5.

Die aromatischen Polyester und Polyestercarbonate A besitzen in der Regel relative Viskositäten von 1,18 bis 2,0, vorzugsweise von 1,2 bis 1,5 (gemessen an einer Lösung einer Konzentration von 0,5 g Substanz in 100 ml $CH_2Cl_2$-Lösung bei 25° C).

Bevorzugte Diphenole für die Herstellung der aromatischen Polyester und Polyestercarbonate A sind Verbindungen der Formel

$$HO - Z - OH \qquad (II)$$

worin Z einen zweiwertigen ein- oder mehrkernigen aromatischen Rest mit 6 - 30 C-Atomen bedeutet, wobei Z derart gebaut ist, daß die beiden OH-Gruppen direkt an je ein C-Atom eines aromatischen Systems gebunden

sind.

Besonders bevorzugte Diphenole sind Verbindungen der Formel

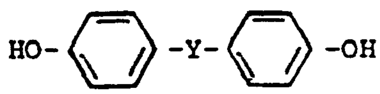 (III)

in der

Y eine Einfachbindung, einen Alkylen- oder Alkylidenrest mit 1 - 7 C-Atomen, einen Cycloalkylen- oder Cycloalkylidenrest mit 5 - 12 C-Atomen, -O-, -S-,

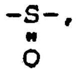,

$-SO_2-$, oder

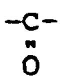

bedeutet,

sowie deren kernalkylierte und kernhalogenierte Derivate, z.B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α, α' -Bis-(hydroxyphenyl)-diisopropylbenzole

sowie deren kernalkylierte und kernhalogenierte Verbindungen, insbesondere z.B. Bisphenol A, Tetramethylbisphenol A, 1, 1- Bis-(4-hydroxyphenyl)-isobutan, 1, 1-Bis-(4-hydroxyphenyl)-cyclohexan, 4, 4'-Dihydroxydiphenylsulfid, 4, 4'-Dihydroxydiphenyl, 4, 4'-Dihydroxydiphenyl-sulfon sowie deren di- und tetrahalogenierten Derivate. Besonders bevorzugt ist Bisphenol A. Es können auch beliebige Mischungen der vorgenannten Diphenole verwendet werden.

Als Kettenabbrecher für die aromatischen Polyester und Polyestercarbonate A, deren Fließfähigkeit erfindungsgemäß verbessert werden kann, werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säuredichloride) verwendet.

Als Verzweigungsmittel für die aromatischen Polyester und Polyestercarbonate A, deren Fließfähigkeit erfindungsgemäß verbessert werden kann, lassen sich vorzugsweise 3- oder mehrfunktionelle Carbonsäurechloride oder 3- und höherwertige Phenole in Mengen von 0,01 bis 1 Mol-%, bezogen auf eingesetzte Dicarbonsäurechloride bzw. auf eingesetzte Diphenole, verwenden.

Die aromatischen Polyestercarbonate A können bis zu 90, vorzugsweise bis zu 45 Mol-%, bezogen auf die Summe von Ester- und Carbonatgruppierung, Carbonatgruppierungen enthalten.

Bevorzugte Verbindungen der Formel I sind Tri- und Tetraoctyl-ditolylether und Di-, Tri- und Tetrastearylditolylether, wobei die Octylreste vorzugsweise linear sind oder der Formel

$$-\underset{CH_3}{\underset{|}{CH}}-(CH_2)_3-\underset{CH_3}{\underset{|}{CH}}-CH_3$$

entsprechen. Wie die substituierten Ditolylether sind auch die substituierten Diphenylether geeignet.

Die Verbindungen der Formel I können z.B. durch Friedel-Crafts-Alkylierung von Diphenylether oder Ditolylethern hergestellt werden.

Die erfindungsgemäßen Mischungen bleiben transparent, solange nicht mehr als 3 Gew.-% der Verbindung I zugesetzt werden und das Verhältnis $C_{Alkyl}/C_{Aryl}$ in der Verbindung I maximal 3 beträgt.

Die homogene Einarbeitung der erfindungsgemäß zu verwendenden Verbindungen I in die aromatischen Polyester bzw. Polyestercarbonate kann z.B. durch Coextrusion der Verbindungen der Formel I und der aromatischen Polyester bzw. Polyestercarbonate und erneute Granulierung erfolgen.

Die Verbindung I kann den Polyestern und Polyestercarbonaten auch während der Herstellung, beispielsweise vor der Eindampfung von deren Lösungen, zugesetzt werden.

Schließlich ist auch das Auftrudeln der Verbindung I auf das Granulat und dessen anschließende unmittelbare Verarbeitung zu Formkörpern möglich.

Die erfindungsgemäß mit Verbindung I ausgerüsteten aromatischen Polyester und Polyestercarbonate können Stabilisatoren, Entformungsmittel, Weichmacher und Füllstoffe, wie z.B. Glasfasern, Glaskugeln, Asbest- und Kohlenstoffasern, Kieselgur, Kaolin, Gesteinsmehl und Pigmente, enthalten.

Sie können nach üblichen Verfahren in Spritzgießmaschinen zu Formkörpern oder in Extrudern zu Halbzeug verarbeitet werden, z.B. zu Lampenhalterungen, Lichtschaltern, Steckern, Gehäuse für Elektrogeräte.

Die in den nachfolgenden Beispielen angegebenen Prozente beziehen sich, soweit nicht anders angegeben, auf das Gewicht.

## Beispiele

A. Herstellung der Polyester und Polyestercarbonate.

### Polyester

Herstellung eines aromatischen Polyesters aus Bisphenol A und äquimolaren Mengen Iso- und Terephthalsäurechlorid

In 7,52 kg 45 %iger wäßriger Natronlauge und 160 l Wasser wurden 9,12 kg Bisphenol A, 24 g Natriumborhydrid sowie 138 g Phenol (3,67 Mol-%, bezogen auf Bisphenol A) unter Stickstoffatmosphäre gelöst. In diese Lösung wurden 148,4 g (1 Mol-%) Triphenylethylphosphoniumbromid eingetragen und anschließend 60 kg Dichlormethan sowie 48 kg Chlorbenzol zugegeben.

In das intensiv gerührte Zweiphasengemisch wurde unter Wasserkühlung innerhalb von 15 Minuten bei einer Innentemperatur von 20-25° C und bei einem pH-wert von 12-13 eine Lösung aus je 4141,2 g Iso- und Terephthalsäuredichlorid in 12 l Dichlormethan eingetragen.

Nach beendeter Zugabe wurde 15 Minuten nachgerührt, anschließend die alkalisch-wäßrige Phase abgetrennt, die organische Phase zunächst mit verdünnter Phosphorsäure, dann mit Wasser gewaschen, bis das Waschwasser eine Leitfähigkeit von $1 \cdot 10^{-5}$ S/cm besaß und dann die Hauptmenge des Dichlormethans unter Normaldruck abdestilliert (Sumpftemperatur bis ca. 100° C).

Die verbliebene, noch heiße Lösung des aromatischen Polyesters in Chlorbenzol wurde bei 320° C in einem Vakuum-Doppelwellenextruder (Schneckendurchmesser 32 mm) bei ca. 0,014 bar bis auf einen Restgehalt von ca. 50 ppm vom Chlorbenzol befreit, der aromatische Polyester als Strang abgezogen und granuliert. Der aromatische Polyester besaß eine relative Viskosität $\eta_{rel}$ von 1.273, gemessen an einer Dichlormethanlösung bei 25° C, die pro 100 ml Lösung 0,5 g Polyester enthielt.

### Polyestercarbonat

Herstellung eines Polyestercarbonats mit 50 Mol-% Carbonester-Anteil, statistisch verteilt, aus Bisphenol A und Iso- und Terephthalsäurechlorid im Molverhältnis 1: 1

In einen Stahlkessel mit intensiv wirkendem Rührer wurden unter Stickstoffatmosphäre 2,736 kg Bisphenol A, 1,5 l 45 %ige wäßrige Natronlauge, 8,4 g Natriumborhydrid, 120 g Triethylbenzylammoniumchlorid, 36 l Wasser,

11 l Dichlormethan und 11 l Chlorbenzol gefüllt und das Gemisch bis zur vollständigen Lösung des Bisphenols A gerührt.

In das intensiv gerührte Zweiphasengemisch wurde dann unter Wasserkühlung innerhalb 15 Minuten eine Lösung aus je 609,09 g Iso- und Terephthalsäuredichlorid und 46,3 g (4,1 Mol-%, bezogen auf Bisphenol A) Phenol in 3 l Dichlormethan gegeben und 1 Stunden nachgerührt. Die Temperatur des Reaktionsgemisches überstieg dabei nicht 22° C. Durch Zugabe von Natriumhydroxid wurde der pH-Wert des Gemisches bei 12-13 gehalten.

Unter fortgesetztem Rühren erfolgte die Einleitung von 1 000 g Phosgen, wobei die Temperatur wieder bei ca. 20° C und der pH-Wert bei 12-13 gehalten wurden. Nach der Einleitung des Phosgens wurden 120 ml einer 4 %igen wäßrigen Lösung von Triethylamin zugesetzt und noch 1 Stunde nachgerührt.

Nach Abtrennung der wäßrig-alkalischen Phase wurde die organische Phase zunächst mit verdünnter Phosphorsäure, dann mit Wasser salzfrei gewaschen und ca. 50 % des Dichlormethans unter Normaldruck abdestilliert. Die verbliebene Lösung wurde mit 15 l Chlorbenzol verdünnt, die Abdestillation des Dichlormethans fortgesetzt, bis die Sumpftemperatur ca. 80° C betrug, das Polyestercarbonat sodann im Vakuumextruder bei 320° C vom Chlorbenzol befreit, als Strang abgezogen und granuliert. Das Polyestercarbonat besaß eine relative Viskosität $\eta_{rel}$ von 1.256, gemessen wie oben für den Polyester angegeben.

**Herstellung von Formmassen und Prüfung**

Mischungen der Polyester- bzw. Polyestercarbonatgranulate und der unten angegebenen Verbindungen I wurden in den unten angegebenen Mengen coextrudiert (Massetemperatur: 320° C). Aus den erhaltenen Granulaten wurden Flachspiralen (Breite 8,5 mm, Dicke 2 mm) bei 345 und 365° C hergestellt. Die Länge der Flachspiralen wird als Maß für die Fließfähigkeit der Schmelze angesehen. Um sicherzustellen, daß die Fließfähigkeitsverbesserung nicht etwa in wesentlichen auf einen Molekulargewichtsabbau zurückzuführen wurden jeweils nach dem Spritzen der Flachspiralen deren relativen Viskositäten bestimmt.

| Beispiel | Harz | Menge und Art der Verbindung I | Flachspirallänge [mm] 345 °C | Flachspirallänge [mm] 365 °C | $\eta_{rel}$ vor und nach Spritzen der Spirale (365 °C) |
|---|---|---|---|---|---|
| 1 | Polyester | - | 130 | 170 | 1.272/1.269 |
| 2 | " | 1 % Tetra-n-octyl-ditolylether | 180 | 240 | 1.271/1.266 |
| 3 | " | 3 % " | 240 | 310 | 1.271/1.264 |
| 4 | " | 2,5 % Isooctyl-ditolylether | 225 | 270 | 1.271/1.264 |
| 5 | " | 2,5 % Diisooctyl-ditolylether | 260 | 320 | 1.271/1.266 |
| 6 | " | 5 % Isooctyl-ditolylether | 250 | 310 | 1.269/1.264 |
| 7 | " | 2 % Tristearyl-ditolylether | 280 | 360 | 1.271/1.265 |
| 8 | Polyester-carbonat | - | 230 | 280 | 1.254/1.253 |
| 9 | " | 1 % Tetra-n-octyl-ditolyether | 310 | 390 | 1.253/1.253 |
| 10 | " | 3 % " | 340 | 440 | 1.251/1.251 |
| 11 | " | 2 % Tristearyl-ditolylether | 410 | 480 | 1.252/1.252 |

Sämtliche Proben 1 - 11 waren transparent.

**Patentansprüche**

A. 95 bis 99,5 Gew.-%, bezogen auf die Summe von A und B, aromatische Polyester und/oder aromatische Polyestercarbonate auf Basis von Diphenolen und Iso- und/oder Terephthalsäure und

B. 0,5 bis 5 Gew.-%, bezogen auf die Summe von A und B mindestens einer Verbindung der Formel

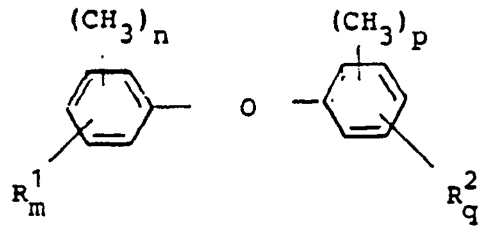

(I)

worin
$R^1$ $R^2$ einen Alkylrest mit 2 bis 24 C-Atomen,
n, m, p, q Null oder eine ganze Zahl von 1 bis 4 bedeuten mit der Maßgabe, daß die Summen von
m+ q mindestens 1 und von
n+m+p+q höchstens 6 betragen.

2. Mischungen nach Anspruch 1, dadurch gekennzeichnet, daß
$R^1$, $R^2$ einen Alkylrest mit 8 bis 18 C-Atomen bedeuten.

3. Mischungen nach Ansprüchen 1 und 2, dadurch gekennzeichnet, daß
m, q 1 oder 2 und
n, p Null oder 1 bedeuten.

4. Verfahren zur Herstellung der Mischungen nach Ansprüchen 1-3, dadurch gekennzeichnet, daß man die Komponenten A und B vereinigt, auf eine Temperatur, die 10 bis 80°C oberhalb des Erweichungspunktes der Komponente A liegt, erhitzt und unter Einwirkung von Scherkräften homogenisiert.

5. Verwendung der Mischungen nach Ansprüchen 1-3 zur Herstellung von Formkörpern und Folien.

**Claims**

A. 95 to 99.5% by weight, based on the sum of A and B, of aromatic polyesters and/or aromatic polyester carbonates based on diphenols and iso- and/or terephthalic acid and

B. 0.5 to 5% by weight, based on the sum of A and B, of at least one compound of the formula

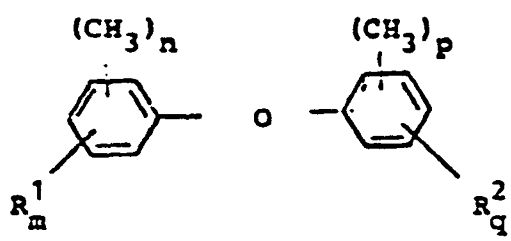

(I)

wherein
$R^1$ and $R^2$ denote an alkyl radical with 2 to 24 C atoms,
n, m, p and q- denote zero or an integer from 1 to 4, with the proviso that the total of
m + q is at least 1 and the total of
n+m+p+q is at most 6.

2. Mixtures according to Claim 1, characterised in that $R^1$ and $R^2$ denote an alkyl radical with 8 to 18 C atoms.

3. Mixtures according to Claims 1 and 2, characterised in that
m and q denote 1 or 2 and
n and p denote zero or 1.

Process for the production of the mixtures according to Claims 1-3, characterised in that the components A and B are combined, heated to a temperature which is 10 to 80°C higher than the softening point of component A

and homogenised under the action of shearing forces.

5. Use of the mixtures according to Claims 1-3 for the production of mouldings and films.

**Revendications**

A. 95 à 99,5 % en poids, par rapport à la somme de A et 8, de polyesters aromatiques et/ou de polyester-carbonates aromatiques à base de diphénols et d'acide iso- et/ou téréphtalique et

B. 0,5 à 5 % en poids, par rapport à la somme de A et B, d'au moins un composé de formule

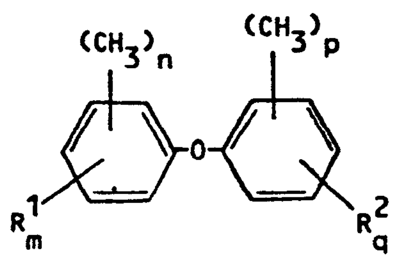

(I)

dans laquelle

$R_1$ et $R_2$ représentent des groupes alkyle en $C_2$-$C_{24}$,

n, m, p, q sont égaux à 0 ou à des nombres entiers de 1 à 4, avec les conditions que les sommes

m + q est égale au moins à 1,

n + m + p + q est au maximum égale à 6.

2. Mélanges selon la revendication 1, caractérisés en ce que:

$R^1$ et $R^2$ représentent des groupes alkyle en $C_8$-$C_{18}$.

3. Mélanges selon les revendications 1 et 2, caractérisés en ce que:

m et q sont égaux à 1 ou 2, et

n et p sont égeux à 0 ou 1.

4. Procédé de préparation des mélanges selon les révendications 1 à 3, caractérisé en ce que l'on combine les composants A et B, on les chauffe à une température supérieure de 10 à 80°C au point de ramollissement du composant A et on homogénéise sous l'action de forces de cisaillement.

5. Utilisation des mélanges selon les revendications 1 à 3, pour la fabrication d'objets moulés et de feuilles.